# EUROPÄISCHE PATENTSCHRIFT

(11) **EP 3 012 144 B1**
(45) Veröffentlichungstag und Bekanntmachung des Hinweises auf die Patenterteilung: **04.11.2020**
(21) Anmeldenummer: 15001931.3
(22) Anmeldetag: 27.06.2015
(51) Int. Cl.: B60K 26/02, B60W 50/16, G05G 5/03, B60W 30/14

(54) **VERFAHREN ZUR STEUERUNG EINER EINSTELLBAREN RÜCKSTELLKRAFT AUF EIN FAHRPEDAL EINES NUTZFAHRZEUGS**
METHOD FOR CONTROLLING AN ADJUSTABLE RESET FORCE ON A DRIVING PEDAL OF A COMMERCIAL VEHICLE
PROCÉDÉ DE COMMANDE D'UNE FORCE DE RAPPEL RÉGLABLE SUR UNE PÉDALE D'UN VÉHICULE UTILITAIRE

(30) Priorität: 16.10.2014 DE 102014015287
(43) Veröffentlichungstag der Anmeldung: 27.04.2016
(73) Patentinhaber: MAN Truck & Bus SE, 80995 München (DE)
(72) Erfinder: Weller, Ralf, 80638 München (DE); Welfers, Hans-Josef, 41844 Wegberg (DE)
(74) Vertreter: v. Bezold & Partner Patentanwälte - PartG mbB

(56) Entgegenhaltungen:
- WO-A1-2006/045826
- DE-A1-102012 213 321

## Beschreibung

Die Erfindung betrifft ein Verfahren zur Steuerung einer einstellbaren Rückstellkraft auf ein Fahrpedal eines Nutzfahrzeugs sowie ein Nutzfahrzeug mit einem Force-Feedback-Fahrpedal und einer Steuerung für das Force-Feedback-Fahrpedal, die ausgeführt ist, das vorgenannte Verfahren durchzuführen.

Aus dem Stand der Technik ist es insbesondere bei Personenkraftwagen bekannt, Fahrpedale mit einer sog. Force-Feedback-Funktion auszustatten, die eine einstellbare, für den Fahrer spürbare Rückstellkraft auf ein Fahrpedal ausüben. Diese Gegenkraft oder Rückstellkraft dient dazu, dem Fahrer eine entsprechende haptische Information bzw. ein Signal zu übermitteln, um ihn zu veranlassen, das Fahrpedal oder Stellorgan entgegen der Betätigungskraft in eine Fahrpedal-Sollposition zu bewegen oder in dieser zu halten. Derartige Fahrpedale werden auch Force-Feedback-Fahrpedale genannt. Die DE 10 2007 021 982 A1 beschreibt beispielsweise den konstruktiven Aufbau eines solchen Fahrpedals mit Force-Feedback-Funktion.

Aus der Druckschrift DE-OS 27 35 695 ist ein Beschleunigungspedalsystem für ein Kraftfahrzeug mit Verbrennungsmotor bekannt, bei dem zur Erzielung einer wirtschaftlichen Fahrweise im Beschleunigungspedal ein erhöhter Gegendruck für den Fall erzeugt wird, dass die aktuelle Pedalbetätigung außerhalb eines ökonomisch optimalen Bereiches liegt. Das Beschleunigungspedalsystem umfasst neben dem Beschleunigungspedal, welches vom Fahrer zwischen einer Ausgangsposition und einer maximalen Betätigungsposition zu verstellen ist und von einem passiven Federelement mit einem in Richtung der Ausgangsstellung wirkenden Pedalgegendruck beaufschlagt wird, einen zusätzlichen, aktiv einzustellenden Aktuator, über den ein zusätzlicher Pedalgegendruck erzeugt werden kann, der sich zu dem Pedalgegendruck des passiven Federelementes addiert, wodurch sich die vom Fahrer aufzubringende Gesamtkraft zur Betätigung des Beschleunigungspedals erhöht. Der Aktuator wird in Abhängigkeit von dem Unterdruck im Ansaugsystem und/oder von der Motordrehzahl gesteuert. Bei Unterschreitung eines Soll-Unterdruckes bzw. bei Überschreitung einer Soll-Motordrehzahl wird davon ausgegangen, dass das Fahrzeug nicht in einer ökonomisch optimalen Weise betrieben wird. In diesem Fall wird der Aktuator betätigt und ein erhöhter Gegendruck im Beschleunigungspedal eingestellt, um dem Fahrer die nicht-optimale FahrWeise zur Kenntnis zu bringen. Der erhöhte Pedalgegendruck soll den Fahrer dazu veranlassen, eine Pedalposition mit niedrigerem Gegendruck einzustellen, welche einer optimalen Fahrweise entspricht.

Weiter ist aus der DE 102 12 674 A1 ein Verfahren zur Erzeugung einer einstellbaren Rückstellkraft in einem Fahrzeug bekannt, bei dem von einem passiven Federelement ein Rückstellkraft-Grundwert und von einem aktiv einstellbaren Kraftsteuerglied eine variable Rückstellkraft erzeugt wird, wobei die Höhe der variablen Rückstellkraft in Abhängigkeit von Fahrzeugzustandsgrößen und/oder Fahrzeugkenngrößen ermittelt wird und als Funktion der Fahrzeugzustandsgrößen und/oder Fahrzeugkenngrößen variabel einstellbar ist. Bei den Fahrzeugzustands- und Kenngrößen kann es sich um motorische Größen, wie z. B. die Kraftstoffzufuhr, oder um nichtmotorische Größen, wie z. B. den Fahrzugstand und die Fahrdynamik beschreibende Größen handeln. Über die variable Einstellung der Höhe und/oder Richtung der variablen Rückstellkraft kann eine gezielte Information über das die Rückstellwirkung auslösende Ereignis übertragen werden.

Die DE 10 2004 026 410 A1 offenbart ebenfalls ein Verfahren zur Steuerung einer einstellbaren Rückstellkraft auf ein Fahrpedal in einem Fahrzeug, bei der die auf das Fahrpedal wirkende Rückstellkraft als Funktion von Fahrzeugzustandsgrößen und/oder Fahrzeugkenngrößen variabel einstellbar ist, wobei insbesondere vorgeschlagen wird, die auf das Fahrpedal wirkende Rückstellkraft als Funktion einer Ist-Fahrzeuggeschwindigkeit und/oder einer Ist-Fahrzeugbeschleunigung und/oder einer das Fahrverhalten des Fahrers kennzeichnenden Größe einzustellen.

Die DE 10 2012 213 321 A1 offenbart ein Verfahren zum Betreiben eines Fahrzeugs, insbesondere ein Verfahren, mit dem auch eine einstellbare Rückstellkraft auf ein Fahrpedal eines Kraftfahrzeugs gesteuert werden kann, bei der auch Topographiedaten berücksichtigt werden.

Die vorgenannten Verfahren haben gemein, dass sie die auf das Fahrpedal wirkende Rückstellkraft als Funktion von Fahrzeugzustandsgrößen und/oder Fahrzeugkenngrößen, wie beispielsweise des Unterdruckes im Ansaugsystem, der Motordrehzahl, der Kraftstoffzufuhr, der Ist-Fahrzeuggeschwindigkeit und/oder der Ist-Fahrzeugbeschleunigung steuert. Nachteilig hieran ist, dass der Fahrer hierdurch erst auf eine nicht-verbrauchsoptimale Fahrweise hingewiesen wird, nachdem diese im Prinzip schon eingetreten ist.

Es ist daher eine Aufgabe der Erfindung, ein Verfahren zur Steuerung einer einstellbaren Rückstellkraft auf ein Fahrpedal bereitzustellen, mit dem Nachteile bekannter Verfahren vermieden werden können. Die Aufgabe der Erfindung ist es insbesondere, ein Verfahren zur Steuerung einer einstellbaren Rückstellkraft auf ein Fahrpedal bereitzustellen, das den Fahrer besser auf eine verbrauchsoptimale Betriebsweise hinweisen kann.

Diese Aufgaben werden durch ein Verfahren mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung werden die genannten Aufgaben durch ein Verfahren zur Steuerung einer einstellbaren Rückstellkraft auf ein Fahrpedal eines Kraftfahrzeugs gelöst, bei dem die auf das Fahrpedal wirkende Rückstellkraft in Abhängigkeit von Topographiedaten variabel einstellbar ist. Das Fahrpedal ist somit als Force-Feedback-Fahrpedal ausgeführt.

Anhand von Topographiedaten der vorausliegenden Fahrstrecke können vorausschauend kraftstoffverbrauchsbeeinflussende Änderungen auf der vorausliegenden Fahrstrecke antizipiert werden und durch entsprechende Erzeugung und/oder Änderung der auf das Fahrpedal wirkenden Rückstellkraft dem Fahrer signalisiert werden. So können beispielsweise in Abhängigkeit von Topographiedaten für einen vorausliegenden Streckenabschnitt Stellen auf dem vorausliegenden Streckenabschnitt ermittelt werden, an denen der Fahrer durch eine Veränderung der auf das Fahrpedal wirkenden Rückstellkraft auf eine verbrauchsmindernde Sollfahrweise und/oder auf eine verbrauchsmindernde Sollhöchstgeschwindigkeit hingewiesen wird. Mit anderen Worten wird dem Fahrer über ein durch das Fahrpedal erzeugtes haptisches Feedback und ohne dass er ein Instrument zu beobachten hat, eine Fahrpedalstellung signalisiert, die eine verbrauchsmindernde Fahrweise bewirkt.

Die vorgenannten Topographiedaten können beispielsweise von einem Navigationssystem oder von einer Topographiedaten-Speichereinrichtung bereitgestellt werden. Die Topographiedaten der jeweiligen Fahrstrecke enthalten eine Information über den topographischen Verlauf der Fahrstrecke und können beispielsweise als relative Höheninformation oder als Steigungs/Gefälle-Information gespeichert werden.

Die erfindungsgemäße Realisierung sieht vor, dass bei einer Fahrt in der Ebene, die anhand der Topographiedaten erkannt werden kann, ein variabler Druckpunkt des Fahrpedals jeweils so verändert wird, dass sich das Fahrzeug mit einer einstellbaren, vorgegebenen ersten Sollhöchstgeschwindigkeit bewegt, wenn der Fahrer das Fahrpedal jeweils auf den Druckpunkt einstellt.

Der Fahrer spürt diesen Druckpunkt in Form einer erhöhten Gegenkraft an einer bestimmten Fahrpedalstellung, die entgegen der Betätigungsrichtung des Fahrpedals wirkt und von einem Aktuator des Force-Feedback-Fahrpedals erzeugt wird. Der Druckpunkt wird bei Fahrten in der Ebene somit fortlaufend bei Bedarf durch einen Regelkreis verändert, so dass durch eine dem Druckpunkt entsprechende Fahrpedalstellung jeweils ein Motormoment in der Höhe angefordert wird, damit die Fahrgeschwindigkeit des Fahrzeugs der ersten Sollhöchstgeschwindigkeit entspricht. Alternativ kann die Kennlinie des Fahrpedals fortlaufend angepasst werden, damit die Fahrgeschwindigkeit des Fahrzeugs der ersten Sollhöchstgeschwindigkeit entspricht. Hält der Fahrer somit seine aktuell ausgeübte Kraft auf das Fahrpedal im Wesentlichen konstant, wird aufgrund des sich ändernden Druckpunktes ohne weiteres Zutun des Fahrers die Geschwindigkeit automatisch auf der ersten Sollhöchstgeschwindigkeit gehalten.

Bei Nutzfahrzeugen kann diese vorgegebene erste Sollhöchstgeschwindigkeit beispielsweise auf einen Wert unterhalb der zulässigen Höchstgeschwindigkeit des Nutzfahrzeugs eingestellt werden, falls ein Nutzer, z. B. ein Speditionsunternehmer, sein Fahrzeug bzw. seine Fahrzeugflotte zur Reduzierung des Windwiderstands besonders verbrauchseffizient betreiben möchte. Das Erreichen dieser eingestellten ersten Sollhöchstgeschwindigkeit in der Ebene wird dann dem Fahrer mittels des Druckpunktes haptisch signalisiert. Durch entsprechende Kraftaufwendung kann der Fahrer diesen Druckpunkt auch übertreten, um schneller als die erste Sollhöchstgeschwindigkeit zu fahren, muss dafür aber den Druckpunkt bewusst übertreten.

Ferner wird in Abhängigkeit von Topographiedaten ein Beginn einer vorausliegenden Steigung ermittelt und vor Beginn der vorausliegenden Steigung der variable Druckpunkt so eingestellt, dass sich das Fahrzeug mit einer einstellbaren, vorgegebenen zweiten Sollhöchstgeschwindigkeit bewegt, wenn der Fahrer das Fahrpedal jeweils auf den Druckpunkt einstellt, wobei die zweite Sollhöchstgeschwindigkeit höher als die erste Sollhöchstgeschwindigkeit ist.

Hält der Fahrer somit seine aktuell ausgeübte Kraft auf das Fahrpedal im Wesentlichen konstant, wird vor Beginn der Steigung aufgrund des sich an die zweite Sollhöchstgeschwindigkeit angepassten Druckpunktes ohne weiteres Zutun des Fahrers die Geschwindigkeit des Fahrzeugs automatisch auf die zweite Sollhöchstgeschwindigkeit erhöht, so dass das Fahrzeug mit einem Geschwindigkeitsüberschuss in die Steigung einfährt. Dadurch kann die kinetische Energie des Fahrzeugs zur zumindest teilweisen Überwindung der Steigung gezielt genutzt werden, da der Fahrer zusätzlichen Schwung mit in die Steigung nehmen kann. Nach Einfahrt in die Steigung wird der Druckpunkt vorzugsweise wieder zurückgesetzt, so dass der variable Druckpunkt einer Fahrgeschwindigkeit der Höhe der ersten Sollgeschwindigkeit entspricht.

Ferner kann in Abhängigkeit von Topographiedaten ein Beginn einer vorausliegenden Gefällestrecke ermittelt werden. Bei einer vorteilhaften Variante dieser Ausgestaltungsform kann durch eine Veränderung der auf das Fahrpedal wirkenden Rückstellkraft dem Fahrer ein erstes Signal übermittelt werden, wenn sich das Kraftfahrzeug in einem ersten Abstand vor dem Beginn einer vorausliegenden Gefällestrecke befindet. Weiterhin kann durch eine Veränderung der auf das Fahrpedal wirkenden Rückstellkraft dem Fahrer ein zweites Signal übermittelt werden, wenn sich das Kraftfahrzeug in einem zweiten Abstand vor oder nach dem Beginn einer vorausliegenden Gefällestrecke befindet, wobei der zweite Abstand kleiner als der erste Abstand ist.

Beispielsweise kann zur Erzeugung des ersten Signals die auf das Fahrpedal wirkende Rückstellkraft so verändert werden, dass ein Klopf- oder Klick-Signal erzeugt wird, vorzugsweise ein Doppel-Klopf- oder Doppel-Klick-Signal, z. B. durch eine pulsartige Variation der Rückstellkraft. Eine weitere Möglichkeit ist beispielsweise die Erzeugung eines Vibrations- oder Ruckelsignals durch entsprechende schnelle Variation der Rückstellkraft.

Zur Erzeugung des zweiten Signals kann beispielsweise eine deutlich wahrnehmbare Gegenkraft erzeugt werden, derart, dass der Fahrer über das Fahrpedal kein zusätzliches Moment anfordern kann oder hierfür die Gegenkraft bewusst übertreten muss. Ferner kann die Erzeugung der Gegenkraft auch so ausgeführt sein, dass sie ansteigend ausgeführt ist, so dass der Fahrer beim Einfahren in das Gefälle durch die Gegenkraft angeleitet wird, situationsgerecht schrittweise vom Gas zu gehen. Hierbei ist es vorteilhaft, den zweiten Abstand so zu wählen, dass das zweite Signal am Beginn der Gefällestrecke oder kurz vor oder kurz nach Beginn der Gefällestrecke erzeugt wird.

Ein besonderer Vorzug dieser Ausführungsvarianten liegt darin, dass der Fahrer durch das erste Signal frühzeitig einen Hinweis auf ein vorausliegendes Gefälle erhält, so dass er zur verbesserten Ausnutzung der kinetischen Energie bereits vor dem Gefälle verbrauchsmindernd vom Gas gehen kann. Direkt vor der Gefällestrecke kann das Erzeugen einer spürbaren Gegenkraft verhindern oder zumindest erschweren, dass der Fahrer über das Fahrpedal ein zusätzliches Moment stellt.

Eine weitere Möglichkeit zur Förderung einer verbrauchsoptimierten Fahrweise sieht vor, dass während eines Rollbetriebs mit unterbrochenem Kraftschluss im Antriebsstrang des Kraftfahrzeugs und falls die aktuelle Geschwindigkeit größer als ein einstellbarer, vorgegebener Geschwindigkeitsschwellenwert ist, über das Fahrpedal eine deutlich wahrnehmbare Gegenkraft und/oder ein Druckpunkt erzeugt wird, derart, dass der Fahrer zum Schließen des Antriebsstrangs die erzeugte Gegenkraft und/oder den Druckpunkt bewusst übertreten muss. Diese Variante verhindert, dass der Fahrer den verbrauchseffizienten Rollbetrieb aus Unachtsamkeit und/oder beiläufig durch eine leichte Betätigung des Fahrpedals beendet. Bei einer vorteilhaften Variante dieser Ausgestaltungsform kann eine optimale Länge des Rollbetriebs mit einem Startpunkt und Endpunkt des Rollbetriebs in Abhängigkeit der Topographiedaten berechnet werden und der Druckpunkt nur während der Fahrt oder des Rollbetriebs des Fahrzeugs zwischen dem Start und Endpunkt erzeugt werden.

Ein weiterer Aspekt der Erfindung betrifft eine Kraftfahrzeug, insbesondere ein Nutzfahrzeug, umfassend ein Force-Feedback-Fahrpedal und eine Steuerung für das Force-Feedback-Fahrpedal, die ausgeführt ist, das erfindungsgemäße Verfahren wie in diesem Dokument offenbart durchzuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben, die die Steuerung der einstellbaren Rückstellkraft auf ein Fahrpedal eines Nutzfahrzeugs in Abhängigkeit von Topographiedaten illustriert. Hierbei kann ein an sich aus dem Stand der Technik bekanntes Force-Feedback-Fahrpedal eingesetzt werden, dessen erzeugbare Rückstellkraft variierbar einstellbar ist. Die Steuerung der einstellbaren Rückstellkraft auf das Fahrpedal erfolgt gemäß einer Ausgestaltungsform der Erfindung durch ein Verfahren bzw. eine Steuerung wie nachfolgend beschrieben.

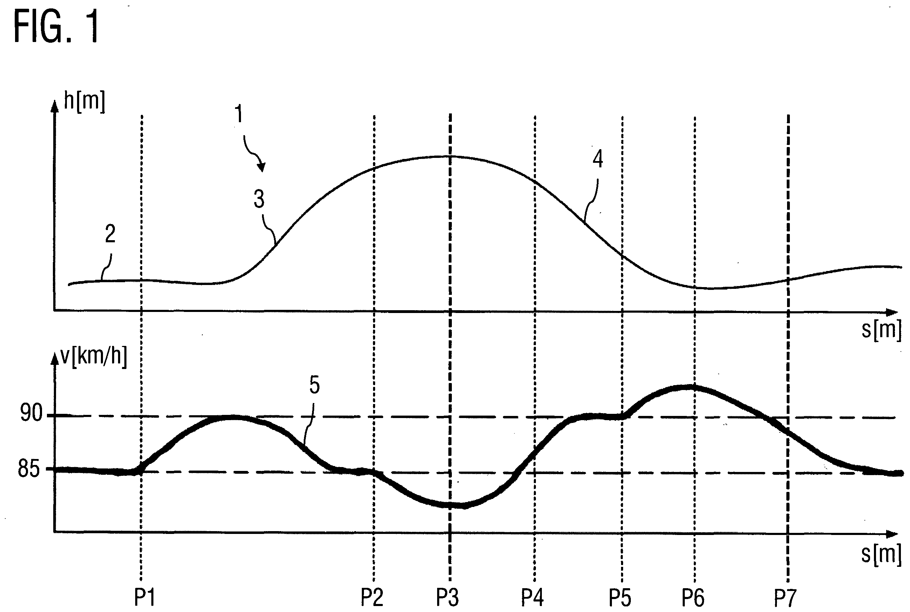

Das obere Diagramm in Figur 1 stellt den topographischen Verlauf der vorausliegenden Fahrtroute 1 in Form einer relativen Höheninformation dar. Auf Basis der eingestellten Fahrtroute im Navigationssystem werden fortlaufend die Topographiedaten der vorausliegenden Fahrtroute ermittelt. Derartige Topographiedaten können beispielsweise in Form von relativen Höheninformationen oder als Steigungs/Gefälle-Informationen von dem Navigationssystem einer Steuereinheit zur Steuerung der einstellbaren Rückstellkraft des Fahrpedals bereitgestellt werden. Das untere Diagramm in Figur 1 zeigt den Verlauf der Ist-Geschwindigkeit 5 des Nutzfahrzeugs entlang der Fahrtroute, wenn der Fahrer das Fahrpedal entsprechend den erfindungsgemäß erzeugten Hinweisen mittels der Force-Feedback-Funktion betätigt.

Während der Fahrt wird der topographische Verlauf der vorausliegenden Fahrstrecke fortlaufend überwacht. Fährt das Nutzfahrzeug in einer Ebene, dargestellt durch den Bereich 2 der Fahrtroute 1, dann wird ein variabler Druckpunkt des Fahrpedals so eingestellt, dass sich das Fahrzeug mit einer einstellbaren, vorgegebenen ersten Sollhöchstgeschwindigkeit bewegt, wenn der Fahrer das Fahrpedal jeweils auf den Druckpunkt einstellt. Im Beispiel der Figur 1 ist dieser erste Geschwindigkeitsschwellenwert 85 km/h und liegt somit etwas unterhalb der zulässigen Höchstgeschwindigkeit von 90 km/h des Nutzfahrzeugs. Dem Fahrer wird somit, ohne dass er ein Instrument zu beobachten hat, über ein haptisches Feedback durch den Druckpunkt des Fahrpedals signalisiert, welche Fahrpedalstellung zur der vorgegebenen Sollhöchstgeschwindigkeit von 85 km/h in der Ebene führt. Übertritt der Fahrer diesen Druckpunkt nicht, bewegt sich das Fahrzeug im Bereich 2 mit der aktuellen Ist-Geschwindigkeit 5 von 85 km/h.

Dieser erste Geschwindigkeitsschwellenwert kann vorab auf einen gewünschten Wert festgelegt und an die Präferenzen des Nutzers angepasst werden. Bei Nutzern, die einen höheren Wert auf möglichst hohe Verbrauchseffizienz legen, kann dieser Wert beispielsweise auf einen niedrigeren Wert eingestellt werden als bei Nutzern, die kürzere Fahrzeiten höher priorisieren.

Wird anhand des topographischen Verlaufs der Fahrstrecke 1 eine vorausliegenden Steigung 3 und/oder deren Beginn ermittelt, dann wird vor Beginn der vorausliegenden Steigung 3, vorliegend am Punkt P1, der variable Druckpunkt so angepasst und eingestellt, dass sich das Fahrzeug mit einer einstellbaren, vorgegebenen zweiten Sollhöchstgeschwindigkeit bewegt, wenn der Fahrer das Fahrpedal jeweils auf diesen Druckpunkt einstellt, wobei die zweite Sollhöchstgeschwindigkeit höher als die erste Sollhöchstgeschwindigkeit ist. In dem in Figur 1 illustrierten Beispiel ist die Höhe der zweiten Sollhöchstgeschwindigkeit 90 km/h.

Aufgrund des geänderten Druckpunktes wird somit der Fahrer eine dem geänderten Druckpunkt entsprechende Fahrpedalstellung einstellen, so dass die aktuelle Fahrzeuggeschwindigkeit 5 nach dem Punkt P1 von 85 km/h auf 90 km/h ansteigt. Durch Einhalten der Druckpunkte kann der Fahrer eine aus Verbrauchsgesichtspunkten optimale Berganfahrt durchführen, bei der die kinetische Energie des Fahrzeugs zur zumindest teilweisen Überwindung der Steigung gezielt genutzt wird, um zusätzlichen Schwung mit in die Steigung zu nehmen. Nach Einfahrt in die Steigung wird der Druckpunkt vorzugsweise wieder auf den vorherigen Wert zurückgesetzt, so dass die Ist-Geschwindigkeit 5 wieder auf den Wert von 85 km/h zurückgeht.

Wird in Abhängigkeit von Topographiedaten ein Beginn P3 einer vorausliegenden Gefällestrecke 4 erkannt, dann wird vor dem Beginn der vorausliegenden Gefällestrecke 4 im Punkt P2 über das Fahrpedal ein leichtes Doppelklicken oder Doppelklopfen erzeugt. Damit wird dem Fahrer frühzeitig der nahende Beginn der Gefällestrecke 4 signalisiert, so dass er zur verbesserten Ausnutzung der kinetischen Energie bereits vor dem Gefälle 4 etwas vom Gas gehen kann. Folgt der Fahrer diesem Hinweis und reduziert den Fahrpedalweg, geht die Geschwindigkeit 5 im Bereich von P2 bis P3 zurück. Unmittelbar vor oder bei Beginn der Gefällestrecke 4 im Punkt P3 wird über die Force-Feedback-Funktion des Fahrpedals eine für den Fahrer deutlich spürbare Gegenkraft erzeugt, die verhindert oder zumindest erschwert, dass der Fahrer über das Fahrpedal ein zusätzliches Moment stellt. Ferner kann die Erzeugung der Gegenkraft auch so ausgeführt sein, dass sie ansteigend ausgeführt ist, so dass der Fahrer beim Einfahren in das Gefälle durch die Gegenkraft angeleitet wird, schrittweise das Fahrpedal zu lösen.

Bedingt durch die Hangabtriebskraft der Gefällestrecke 4 steigt die Fahrzeuggeschwindigkeit 5 wieder an, ohne dass der Fahrpedalweg erhöht werden muss. Bei schweren Nutzfahrzeugen besteht bei Fahrten auf längeren Gefällestrecken bekanntermaßen die Gefahr, dass das Nutzfahrzeug auch ohne Kraftstoffzufuhr, d. h. im nicht befeuerten Betrieb, durch den Hangabtrieb zu weit über eine vorgegebene Höchstgeschwindigkeit hinaus beschleunigt.

Um zu vermeiden, dass die Fahrgeschwindigkeit 5 des Nutzfahrzeugs eine vorgegebene Höchstgeschwindigkeit von z. B. 90 km/h überschreitet, wird vorliegend ein Bremsgeschwindigkeitsregler (sog. Bremsomat) eingesetzt, der über eine Bremseinrichtung, vorzugsweise über die Dauerbremse, die Fahrzeuggeschwindigkeit 5 auf eine Bremsomat-Sollgeschwindigkeit von 90 km/h regelt, so dass diese im Bereich zwischen den Punkten P4 und P5 nicht überschritten wird.

Wird anhand der Topographie-Daten wird das Ende P6 der Gefällestrecke 4 ermittelt, dann wird die aktuelle Bremsomat-Sollgeschwindigkeit vor dem Ende der Gefällestrecke am Punkt P5 kurzfristig erhöht, so dass die kinetische und potentielle Energie des Fahrzeugs ausgenutzt werden kann, um den Motorzugbetrieb in dem nachfolgendem Streckenabschnitt zu verzögern.

Folglich steigt die Fahrzeuggeschwindigkeit 5 im Bereich P5 bis P6 an und nimmt nach Durchlaufen des Endes P6 der Gefällestrecke wieder ab. Nach P6 wird der Triebstrang des Nutzfahrzeuges mit automatisiertem Getriebe oder Automatikgetriebe geöffnet. Dies kann durch einen prädiktiven Rollalgorithmus gesteuert werden, welcher durch einen Rollbetrieb mit unterbrochenem Kraftschluss den Kraftstoffverbrauch reduziert.

Eine weitere Möglichkeit zur Förderung einer verbrauchsoptimierten Fahrweise sieht vor, dass während eines Rollbetriebs mit unterbrochenem Kraftschluss im Antriebsstrang des Kraftfahrzeugs und falls die aktuelle Geschwindigkeit größer als ein einstellbarer, vorgegebener Geschwindigkeitsschwellenwert ist, über das Fahrpedal eine deutlich wahrnehmbare Gegenkraft und/oder ein Druckpunkt erzeugt wird, derart, dass der Fahrer zum Schließen des Antriebsstrangs die erzeugte Gegenkraft und/oder den Druckpunkt bewusst übertreten muss. Diese Variante verhindert, dass der Fahrer den verbrauchseffizienten Rollbetrieb aus Unachtsamkeit und/oder beiläufig durch eine leichte Betätigung des Fahrpedals beendet. Hierzu kann eine verbrauchsoptimale Länge des Rollbetriebs berechnet werden, so dass z. B. die Gegenkraft nur für die berechnete Länge des Rollbetriebs erzeugt wird. Das berechnete Ende des Rollbetriebs stellt in Figur 1 der Punkt P7 dar.

Die Erfindung ist nicht auf die vorstehend beschriebenen bevorzugten Ausführungsbeispiele beschränkt. Vielmehr ist eine Vielzahl von Varianten und Abwandlungen möglich, die von dem Anspruchssatz definiert sind.

### Bezugszeichenliste

- 1: Fahrstrecke
- 2: Ebene Fahrstrecke
- 3: Steigung
- 4: Gefällestrecke
- 5: Ist-Geschwindigkeit des Fahrzeugs

## Patentansprüche

1. Verfahren zur Steuerung einer einstellbaren Rückstellkraft auf ein Fahrpedal eines Kraftfahrzeugs, insbesondere eines Nutzfahrzeugs, wobei die auf das Fahrpedal wirkende Rückstellkraft in Abhängigkeit von Topographiedaten variabel einstellbar ist; **dadurch gekennzeichnet,**
**dass** bei Fahrten in der Ebene ein variabler Druckpunkt des Fahrpedals jeweils so eingestellt wird, dass sich das Fahrzeug mit einer einstellbaren, vorgegebenen ersten Sollhöchstgeschwindigkeit bewegt, wenn der Fahrer das Fahrpedal jeweils auf den Druckpunkt einstellt; und
**dass** in Abhängigkeit von Topographiedaten ein Beginn einer vorausliegenden Steigung ermittelt wird und vor Beginn der vorausliegenden Steigung der variable Druckpunkt so eingestellt wird, dass sich das Fahrzeug mit einer einstellbaren, vorgegebenen zweiten Sollhöchstgeschwindigkeit bewegt, wenn der Fahrer das Fahrpedal jeweils auf den Druckpunkt einstellt, wobei die zweite Sollhöchstgeschwindigkeit höher als die erste Sollhöchstgeschwindigkeit ist.

2. Verfahren nach Anspruch 1, **dadurch gekennzeichnet, dass** in Abhängigkeit von Topographiedaten für einen vorausliegenden Streckenabschnitt Stellen auf dem vorausliegenden Streckenabschnitt ermittelt werden, an denen der Fahrer durch eine Veränderung der auf das Fahrpedal wirkenden Rückstellkraft auf eine Sollfahrweise und/oder eine Sollhöchstgeschwindigkeit hingewiesen wird.

3. Verfahren nach einem der vorhergehenden Ansprüche, **dadurch gekennzeichnet, dass** in Abhängigkeit von Topographiedaten ein Beginn einer vorausliegenden Gefällestrecke ermittelt wird.

4. Verfahren nach Anspruch 3, **dadurch gekennzeichnet,**
(a) **dass** durch eine Veränderung der auf das Fahrpedal wirkenden Rückstellkraft dem Fahrer ein erstes Signal übermittelt wird, wenn sich das Kraftfahrzeug in einem ersten Abstand vor dem Beginn einer vorausliegenden Gefällestrecke befindet; und
(b) **dass** durch eine Veränderung der auf das Fahrpedal wirkenden Rückstellkraft dem Fahrer ein zweites Signal übermittelt wird, wenn sich das Kraftfahrzeug in einem zweiten Abstand vor oder nach dem Beginn einer vorausliegenden Gefällestrecke befindet, wobei der zweite Abstand kleiner als der erste Abstand ist.

5. Verfahren nach Anspruch 4, **dadurch gekennzeichnet,**
(a) **dass** zur Erzeugung des ersten Signals die auf das Fahrpedal wirkende Rückstellkraft so verändert wird, dass das Fahrpedal ein Klopf- oder Klick-Signal erzeugt, vorzugsweise ein Doppel-Klopf- oder Doppel-Klick-Signal; und/oder
(b) **dass** zur Erzeugung des zweiten Signals eine wahrnehmbare Gegenkraft erzeugt wird, derart, dass der Fahrer über das Fahrpedal kein zusätzliches Moment anfordern kann oder hierfür die Gegenkraft bewusst übertreten muss; und/oder
(c) **dass** der zweite Abstand so gewählt wird, dass das zweite Signal am Beginn der Gefällestrecke oder kurz vor oder kurz nach Beginn der Gefällestrecke erzeugt wird.

6. Verfahren nach einem der vorhergehenden Ansprüche, **dadurch gekennzeichnet, dass** während eines Rollbetriebs mit unterbrochenem Kraftschluss im Antriebsstrang des Kraftfahrzeugs und falls die aktuelle Geschwindigkeit größer als ein einstellbarer, vorgegebener Geschwindigkeitsschwellenwert ist, über das Fahrpedal eine deutlich wahrnehmbare Gegenkraft und/oder ein Druckpunkt erzeugt wird, derart, dass der Fahrer zum Schließen des Antriebsstrangs die erzeugte Gegenkraft und/oder den Druckpunkt bewusst übertreten muss.

7. Kraftfahrzeug, insbesondere Nutzfahrzeug, umfassend ein Force-Feedback-Fahrpedal und eine Steuerung für das Force-Feedback-Fahrpedal, die ausgeführt ist, das Verfahren gemäß einem der vorhergehenden Ansprüche durchzuführen.

## Claims

1. Method for controlling an adjustable restoring force on an accelerator pedal of a motor vehicle, in particular of a commercial vehicle, wherein the restoring force acting on the accelerator pedal is variably adjustable depending on topographical data; **characterized in that,**
when travelling on the level a variable pressure point of the accelerator pedal is set in each case such that the vehicle moves at an adjustable, specified first target maximum speed if the driver sets the accelerator pedal to the respective pressure point; and
depending on topographical data, a start of an up gradient ahead is determined and before the start of the up gradient ahead the variable pressure point is set such that the vehicle moves at an adjustable, specified second target maximum speed if the driver sets the accelerator pedal to the respective pressure point, wherein the second target maximum speed is greater than the first target maximum speed.

2. Method according to Claim 1, **characterized in that** depending on topographical data for a segment of route ahead, points on the segment of route ahead are determined at which the driver is informed of a desired driving manner and/or a target maximum speed by a change of the restoring force acting on the accelerator pedal.

3. Method according to any one of the preceding claims, **characterized in that** a start of a downhill section ahead is determined depending on topographical data.

4. Method according to Claim 3, **characterized in that,**
(a) a first signal is transmitted to the driver by a change of the restoring force acting on the accelerator pedal when the motor vehicle is at a first distance before the start of a downhill section ahead; and
(b) a second signal is transmitted to the driver by a change of the restoring force acting on the accelerator pedal when the motor vehicle is at a second distance before or after the start of a downhill section ahead, wherein the second distance is smaller than the first distance.

5. Method according to Claim 4, **characterized in that,**
(a) for the generation of the first signal the restoring force acting on the accelerator pedal is changed such that the accelerator pedal produces a knocking signal or a clicking signal, preferably a double knock signal or a double click signal; and/or
(b) for the generation of the second signal a detectable counter force is produced such that the driver cannot demand additional torque by means of the accelerator pedal or must deliberately overcome the counter force for this purpose; and/or
(c) the second distance is selected such that the second signal is produced at the start of the downhill section or shortly before or shortly after the start of the downhill section.

6. Method according to any one of the preceding claims, **characterized in that** during a rolling operation with intermittent traction in the drive train of the motor vehicle and if the current speed is greater than an adjustable, predetermined speed threshold value, a clearly detectable counter force and/or a pressure point is/are generated by means of the accelerator pedal such that the driver has to deliberately overcome the generated counter force and/or pass through the pressure point in order to close the drive train.

7. Motor vehicle, in particular a commercial vehicle, comprising a force feedback accelerator pedal and a controller for the force feedback accelerator pedal, which is implemented to carry out the method according to any one of the preceding claims.

## Revendications

1. Procédé de commande d'une force de rappel réglable sur une pédale d'accélérateur d'un véhicule automobile, en particulier d'un véhicule utilitaire, la force de rappel agissant sur la pédale d'accélérateur étant réglable de manière variable en fonction de données topographiques ;
**caractérisé**
**en ce que** lors de déplacements sur le plat, un point de pression variable de la pédale d'accélérateur est réglé respectivement de telle sorte que le véhicule se déplace à une première vitesse de consigne maximale, prédéfinie et réglable, si le conducteur règle la pédale d'accélérateur respectivement sur le point de pression ; et
**en ce qu'**en fonction de données topographiques, un début d'une montée à venir est déterminé et le point de pression variable est réglé avant le début de la montée à venir de telle sorte que le véhicule se déplace à une deuxième vitesse de consigne maximale, prédéfinie et réglable, si le conducteur règle la pédale d'accélérateur respectivement sur le point de pression, la deuxième vitesse de consigne maximale étant supérieure à la première vitesse de consigne maximale.

2. Procédé selon la revendication 1, **caractérisé en ce qu'**en fonction de données topographiques pour un tronçon de route à venir, des endroits sur le tronçon de route à venir sont déterminés où le conducteur est averti d'un mode de conduite de consigne et/ou d'une vitesse de consigne maximale par une variation de la force de rappel agissant sur la pédale d'accélérateur.

3. Procédé selon l'une quelconque des revendications précédentes, **caractérisé en ce qu'**un début d'une descente à venir est déterminé en fonction de données topographiques.

4. Procédé selon la revendication 3, **caractérisé**
(a) **en ce qu'**une variation de la force de rappel agissant sur la pédale d'accélérateur permet de transmettre un premier signal au conducteur lorsque le véhicule automobile se trouve à une première distance du début d'une descente à venir ; et
(b) **en ce qu'**une variation de la force de rappel agissant sur la pédale d'accélérateur permet de transmettre un deuxième signal au conducteur lorsque le véhicule automobile se trouve à une deuxième distance du début d'une descente à venir, la deuxième distance étant inférieure à la première distance.

5. Procédé selon la revendication 4, **caractérisé**
(a) **en ce que** pour la génération du premier signal, la force de rappel agissant sur la pédale d'accélérateur est variée de telle sorte que la pédale d'accélérateur génère un signal de cognement ou de cliquetis, de préférence un double signal de cognement ou de cliquetis ; et/ou
(b) **en ce que** pour la génération du deuxième signal, une force antagoniste perceptible est générée de telle sorte que le conducteur ne peut demander aucun couple supplémentaire par l'intermédiaire de la pédale d'accélérateur ou doit délibérément surmonter la force antagoniste à cet effet ; et/ou
(c) **en ce que** la deuxième distance est sélectionnée de telle sorte que le deuxième signal est généré au début de la descente ou juste avant ou juste après le début de la descente.

6. Procédé selon l'une quelconque des revendications précédentes, **caractérisé en ce que** pendant un mode de roulement à adhérence par intermittence dans la chaîne cinématique du véhicule automobile, et si la vitesse actuelle est supérieure à une valeur seuil de vitesse prédéfinie réglable, une force antagoniste et/ou un point de pression nettement perceptible sont générés par l'intermédiaire de la pédale d'accélérateur de telle sorte que le conducteur doit sciemment surmonter la force antagoniste et/ou le point de pression généré(e) pour fermer la chaîne cinématique.

7. Véhicule automobile, en particulier véhicule utilitaire, comprenant une pédale d'accélérateur à retour de force et une commande pour la pédale d'accélérateur à retour de force qui est réalisée pour effectuer le procédé selon l'une quelconque des revendications précédentes.
